**Europäisches Patentamt**

(19) **European Patent Office**

**Office européen des brevets**

(11) Veröffentlichungsnummer: **0 152 149**

**B1**

(12) **EUROPÄISCHE PATENTSCHRIFT**

(45) Veröffentlichungstag der Patentschrift:
10.05.89

(21) Anmeldenummer: **85200162.7**

(22) Anmeldetag: **11.02.85**

(51) Int. Cl.⁴: **G 01 L 11/00**

(54) **Optischer Drucksensor.**

(30) Priorität: **13.02.84 DE 3405026**

(43) Veröffentlichungstag der Anmeldung:
**21.08.85 Patentblatt 85/34**

(45) Bekanntmachung des Hinweises auf die Patenterteilung:
**10.05.89 Patentblatt 89/19**

(84) Benannte Vertragsstaaten:
**DE FR GB**

(56) Entgegenhaltungen:
**GB-A-1 068 014**

**LASER UND OPTOELEKTRONIK, Band 15, Nr. 3, September 1983, Seiten 226-243, Stuttgart, DE; K. SPENNER et al.: "Faseroptische Multimode-Sensoren: eine Übersicht"**

(73) Patentinhaber: **Philips Patentverwaltung GmbH, Wendenstrasse 35 Postfach 10 51 49, D-2000 Hamburg 1 (DE)**
(84) Benannte Vertragsstaaten: **DE**

(73) Patentinhaber: **N.V. Philips' Gloeilampenfabrieken, Groenewoudseweg 1, NL- 5621 BA Eindhoven (NL)**
(84) Benannte Vertragsstaaten: **FR GB**

(72) Erfinder: **Martens, Gerhard, Dr., Hellhörn la, D-2086 Ellerau (DE)**

(74) Vertreter: **Auer, Horst, Dipl.- Ing., Philips Patentverwaltung GmbH Wendenstrasse 35 Postfach 10 51 49, D-2000 Hamburg 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf einen optischen Drucksensor, bestehend aus einem lichtdurchlässigen Körper, der mit einer Druckmeßkammer mit einer Einlaßöffnung für ein unter Druck stehendes flüssiges oder gasförmiges Medium in Verbindung steht und der von polarisiertem Licht durchstrahlt wird, und aus einem in Strahlrichtung des Lichtes hinter dem Körper angeordneten Analysator, der aus dem Licht mit druckabhängigem Polarisationszustand linear polarisiertes Licht mit einer Stärke ausfiltert, die sich mit dem Druck in der Druckmeßkammer ändert.

Optische Drucksensoren werden zur Erfassung von Drücken bzw. von Differenzdrücken explosiver Flüssigkeiten und Gase verwendet, da optische Drucksensoren lediglich über Lichtleiter mit der Auswerteschaltung verbunden sind und somit frei von elektrischen Spannungen sind, die gefährliche Funkenbildung verursachen können.

Aus der DE-OS-3 138 061 ist ein optischer Drucksensor mit einem blockförmigen, lichtdurchlässigen Körper bekannt, der von polarisiertem Licht durchstrahlt wird und auf den der zu erfassende Druck einwirkt. Soll hierbei der Druck eines flüssigen oder gasförmigen Mediums erfaßt werden, ist es erforderlich, das Gas oder die Flüssigkeit in einen Balg zu leiten, der mit einer dem Druck des Mediums entsprechenden Kraft auf den lichtdurchlässigen Körper drückt. Dadurch wird der Polarisationszustand des den Körper durchstrahlenden Lichtes derart verändert, daß ein in Strahlrichtung des Lichtes hinter dem Körper angeordneter Analysator aus dem Licht mit druckabhängigem Polarisationszustand linear polarisiertes Licht mit einer der Größe des Flüssigkeits- oder Gasdruckes entsprechenden Stärke ausfiltert. Hierbei sind der Balg und der lichtdurchlässige Körper in einer Kammer angeordnet, die für den Balg und den lichtdurchlässigen Körper als Halterung dient.

Um eine definierte und homogene Spannungsverteilung im lichtdurchlässigen Körper zu erzeugen, muß der Balg mit einem ebenen Boden versehen sein und muß so aufgebaut sein, daß der Flüssigkeits- oder Gasdruck längs einer zu der Fläche der Befestigungskammer rechtwinkligen Achse gerichtet ist, damit der Balg in Richtung der Hauptspannungsachse auf den lichtdurchlässigen Körper einwirkt. Bei der Herstellung und insbesondere beim Justieren des bekannten Sensors ist somit eine sehr hohe Präzision erforderlich, damit der Sensor fehlerfrei arbeitet und die zur Messung des Flüssigkeitsdruckes erforderliche Empfindlichkeit erreicht.

Aus der GB-A-1 068 014 ist ein optischer Drucksensor bekannt, bei dem ein Druck von Außen auf einen mit einem Hohlraum versehenen lichtdruchlässigen Körper einwirkt.

Aufgabe der vorliegenden Erfindung ist es, einen einfach aufgebauten, empfindlichen Drucksensor zu schaffen, der den Druck eines Gases oder einer Flüssigkeit genau erfaßt und dessen Empfindlichkeit innerhalb weiter Grenzen veränderbar ist.

Diese Aufgabe wird bei einem Drucksensor eingangs erwähnter Art erfindungsgemäß dadurch gelöst, daß die Druckmeßkammer als Hohlraum innerhalb des lichtdurchlässigen Körpers ausgebildet ist.

Hierbei verändern sich die inneren Spannungen im lichtdurchlässigen Körper mit dem Druck des in die Druckmeßkammer eingeleiteten flüssigen oder gasförmigen Mediums. Über eine Analyse des sich bereits durch sehr kleine innere Spannungen veränderbaren Polarisationszustandes des den Körper durchstrahlenden polarisierten Lichtes ist der Flüssigkeits- bzw. Gasdruck genau erfaßbar. Außerdem läßt sich durch eine Veränderung des Durchmessers und der Form der Druckmeßkammer die Empfindlichkeit des Drucksensors innerhalb weiter Grenzen verändern.

Um die Differenz zweier unterschiedlicher Gas- oder Flüssigkeitsdrücke messen zu können, ist es vorteilhaft, daß der Körper vier gleichmäßig über seinen Umfang verteilte und paarweise einander gegenüberliegende Druckmeßkammern mit je einer Einlaßöffnung aufweist, wobei den beiden Druckmeßkammerpaaren unterschiedliche Drücke zugeführt werden.

Wenn die vier Druckmeßkammern als nach außen abgedichtete Schlitze ausgebildet sind, die sich paarweise mit ihren Längswänden gegenüberliegen, ist die Fläche, über die das Gas bzw. die Flüssigkeit auf den von Licht durchstrahlten Bereich des Körpers drückt, sehr groß, wodurch der Drucksensor sehr empfindlich auf Gas- oder Flüssigkeitsdrücke reagiert und insbesondere kleine Druckdifferenzen bei hohem Gleichdruckanteil fehlerfrei messen kann. Hierbei lassen sich schlitzartige Druckmeßkammern, die gerade ausgebildet sind, besonders einfach aus dem lichtdurchlässigen Körper herausfräsen.

Zur Erfassung sehr hoher Drücke kann man die vier Druckmeßkammern als auf einem gemeinsamen Radius liegende, nach außen abgedichtete, runde Bohrungen ausbilden.

Die Herstellung des Drucksensors wird vereinfacht, wenn die Druckmeßkammern als durchgehende Löcher in den Körper eingearbeitet sind, auf den im Bereich der Druckmeßkammern beidseitig Dichtungsplatten angebracht sind.

Ein einfach herstellbarer Drucksensor ergibt sich, wenn die Dichtungsplatten aus Metall bestehen und miteinander verschraubt sind. Hierbei wird der Polarisationszustand des Lichtes durch von den Dichtungsplatten verursachte innere Spannungen des Körpers nicht beeinflußt, da die inneren Spannungen parallel zur Richtung des Lichtes liegen.

In einer vorteilhaften Ausgestaltung der Erfindung besteht der lichtdurchlässige Körper aus einer runden Scheibe und sind die Dichtungsplatten ringförmig ausgebildet. Derartige Drucksensoren sind kompakt aufgebaut und einfach herstellbar.

In einer weiteren Ausgestaltung der Erfindung weist der Körper zwischen den Druckmeßkammern zusätzliche Aussparungen auf. Dadurch werden die inneren Spannungen auf den vom Licht durchstrahlten Bereich des lichtdurchlässigen Körpers konzentriert, wodurch sich die Empfindlichkeit des Drucksensors vergrößert.

Einige Ausführungsbeispiele der Erfindung werden im folgenden anhand der Zeichnungen beschrieben. Es zeigen:

Fig. 1   einen Querschnitt durch den lichtdurchlässigen Körper entlang der Linie I - I in Fig. 2.

Fig. 2   einen Längsschnitt durch den optischen Drucksensor entlang der Linie II - II der Fig. 1.

Fig. 3   einen optischen Drucksensor mit Dichtungsplatten.

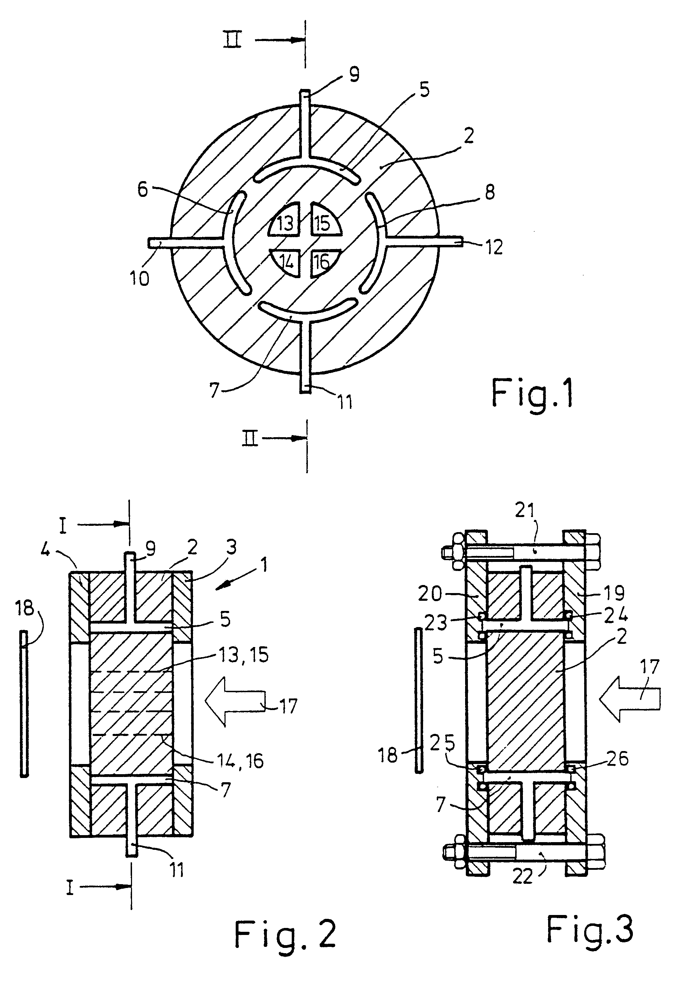

Der in Fig. 1 im Schnitt dargestellte lichtdurchlässige Körper 2 enthält vier als teilkreisförmige Schlitze ausgebildete Druckmeßkammern 5 bis 8. Hierbei können die Wände einander gegenüberliegender Schlitze 6, 8 und 5, 7 eben und parallel zueinander angeordnet sein.

Wie in Fig. 2 dargestellt, werden die als durchgehende Löcher ausgebildeten Schlitze nach außen durch zwei auf die beiden Stirnseiten des Körpers 2 aufgebrachte Dichtungsplatten 3 und 4 abgedichtet. Die Dichtungsplatten 3 und 4 können aus dem gleichen Material wie der lichtdurchlässige Körper 2 bestehen. Sie sind mit den Stirnseiten des Körpers 2 beispielsweise verklebt.

Jede Druckmeßkammer 5 bis 8 ist mit einer eigenen Einlaßöffnung 9 bis 12 versehen. Über diese Einlaßöffnungen 9 bis 12 wird den Druckmeßkammern 5 bis 8 ein unter Druck stehendes flüssiges oder gasförmiges Medium zugeführt. Die Druckmeßkammern 5 bis 8 sind gleichmäßig über den Umfang des Körper 2 verteilt und liegen auf einem gemeinsamen Radius. Der Körper 2 kann je nach Anwendung mit weniger als vier Druckmeßkammern, beispielsweise mit lediglich einer Druckmeßkammer oder auch mit mehr als vier Druckmeßkammern versehen sein.

Der lichtdurchlässige Körper 2 ist als runde Scheibe ausgebildet und besteht aus Quarzglas, Glaskeramik oder Titansilikatglas. Er kann jede andere Form, beispielsweise die Form eines Würfels oder eines Quaders aufweisen. Hat der Körper 2 einen Durchmesser von 6 cm und eine Dicke von 3 cm, weist der Drucksensor 1 ohne die noch zu beschreibenden zusätzlichen Aussparungen 13 bis 16 einen Meßbereich von ca. 1 bis 10 bar auf.

Die Druckmeßkammern 5 bis 8 können auch als durchgehende, runde Bohrungen mit einem Durchmesser von beispielsweise 1 bis 3 mm ausgebildet sein. Dann beträgt der Meßbereich des Drucksensors ca. 10 bis 500 bar. Über den Bohrungsdurchmesser und den Abstand der Bohrungen voneinander läßt sich hierbei der Meßbereich des Drucksensors innerhalb weiter Grenzen verändern.

Durch in den Körper 2 zwischen den Druckmeßkammern 5 bis 8 zusätzlich eingearbeitete Aussparungen 13 bis 16 läßt sich die Empfindlichkeit des Drucksensors weiter vergrößern. Die Aussparungen 13 bis 16 können, wie in Fig. 1 und 2 dargestellt, als durchgehende Löcher ausgebildet sein. Beträgt der Abstand zwischen den Außenwänden der Aussparungen 13 und 16 bzw. 14 und 15 ca. 25 mm, so entstehen dazwischen kreuzförmig ausgebildete Stege mit einigen Millimetern Breite, auf die sich die inneren Spannungen im Körper 2 konzentrieren. Dadurch läßt sich ein Meßbereich von ca. 10 mbar bis 1 bar erreichen.

Strahlt linear oder elliptisch polarisiertes Licht 17 durch den Körper 2, filtert ein als Polarisator ausgebildeteter Analysator 18 aus dem Licht 17 linear polarisiertes Licht aus, dessen Stärke ein Maß für den zu messenden Druck des Mediums ist.

Werden in die Druckmeßkammern 5 und 7 bzw. 6 und 8 jeweils Gase mit unterschiedlichen Drücken eingeleitet, so treten im zwischen den Druckmeßkammern 5 bis 8 liegenden Bereich des Körpers 2 innere Spannungen auf, die sich mit der Differenz der Gasdrücke verändern. Diese inneren Spannungen verändern den Polarisationszustand des Lichtes 17 derart, daß sich auch die Stärke des vom Analysator 18 ausgefilterten Lichtes verändert. Diese Lichtstärke wird gemessen und gibt über eine Auswerteschaltung Auskunft über die Differenz der Gasdrücke.

Die ringförmigen Dichtungsplatten 19 und 20 des in Fig. 3 dargestellten Drucksensors bestehen aus Metall und sind über Schraubbolzen 21 und 22 miteinander verbunden. Zwischen dem Körper 2 und den Dichtungsplatten 19 und 20 befinden sich Dichtungsringe 23 bis 26, die die Druckmeßkammern 5 bis 8 nach außen abdichten.

Die von den Dichtungsplatten 19 und 20 im Körper 2 verursachten inneren Spannungen liegen parallel zur Richtung 17 des den Körper 2 durchstrahlenden Lichtes und haben somit keinen Einfluß auf das Meßergebnis.

**Patentansprüche**

1. Optischer Drucksensor, bestehend aus einem lichtdurchlässigen Körper (2), er mit einer Druckmeßkammer (5 bis 8) mit einer Einlaßöffnung (9 bis 12) für ein unter Druck stehendes flüssiges oder gasförmiges Medium in Verbindung steht und der von polarisiertem Licht (17) durchstrahlt wird, und aus einem in Strahlrichtung des Lichtes hinter dem Körper angeordneten Analysator (18), der aus dem Licht mit druckabhängigem Polarisationszustand linear polarisiertes Licht mit einer Stärke ausfiltert, die sich mit dem Druck in der Druckmeßkammer (5 bis 8) ändert, <u>dadurch gekennzeichnet</u>, daß die Druckmeßkammer (5 bis 8) als Hohlraum innerhalb des lichtdurchlässigen Körpers (2) ausgebildet ist.

2. Optischer Drucksensor nach Anspruch 1, <u>dadurch gekennzeichnet</u>, daß der Körper (2) vier gleichmäßig über seinen Umfang verteilte paarweise einander gegenüberliegende Druckmeßkammern (5 bis 8) mit je einer Einlaßöffnung (9 bis 12) aufweist, wobei den beiden Druckmeßkammerpaaren (5 und 7; 6 und 8) unterschiedliche Drücke zugeführt werden.

3. Optischer Drucksensor nach Anspruch 2, <u>dadurch gekennzeichnet</u>, daß die vier Druckmeßkammern (5 bis 8) als nach außen abgedichtete Schlitze ausgebildet sind, die sich paarweise mit ihren Längswänden gegenüberliegen.

4. Optischer Drucksensor nach Anspruch 3, <u>dadurch gekennzeichnet</u>, daß die schlitzartigen Druckmeßkammern gerade ausgebildet sind.

5. Optischer Drucksensor nach Anspruch 3, <u>dadurch gekennzeichnet</u>, daß die als Schlitze ausgebildeten Druckmeßkammern (5 bis 8) teilkreisförmig gebogen sind und auf einem gemeinsamen Radius liegen.

6. Optischer Drucksensor nach Anspruch 2, <u>dadurch gekennzeichnet</u>, daß die vier Druckmeßkammern als auf einem gemeinsamen Radius liegende, nach außen abgedichtete runde Bohrungen ausgebildet sind.

7. Optischer Drucksensor nach Anspruch 1 bis 6, <u>dadurch gekennzeichnet</u>, daß die Druckmeßkammern (5 bis 8) als durchgehende Löcher in den Körper (2) eingearbeitet sind, auf dem im Bereich der Druckmeßkammern (5 bis 8) beidseitig Dichtungsplatten (3, 4) angebracht sind.

8. Optischer Drucksensor nach Anspruch 7, <u>dadurch gekennzeichnet</u>, daß die Dichtungsplatten (19, 20) aus Metall bestehen und miteinander verschraubt sind.

9. Optischer Drucksensor nach Anspruch 7 oder 8, <u>dadurch gekennzeichnet</u>, daß der Körper (2) aus einer runden Scheibe besteht und die Dichtungsplatten (3, 4, 19, 20) ringförmig ausgebildet sind.

10. Optischer Drucksensor nach Anspruch 2 bis 9, <u>dadurch gekennzeichnet</u>, daß der Körper (2) zwischen den Druckmeßkammern (5 bis 8) zusätzliche Aussparungen (13 bis 16) aufweist.

## Claims

1. An optical pressure sensor consisting of a translucent body (2) which communicates with a pressure measurement chamber (5 to 8) having an inlet opening (9 to 12) for a pressurized liquid or gaseous medium and which is irradiated by polarized light (17), and of an analyzer (18) which is arranged behind the body in the irradiation direction of the light and which filters from the light, having a pressure-dependent polarization condition, linearly polarized light having an intensity which varies with the pressure in the pressure measurement chamber (5 to 8), characterized in that the pressure measurement chamber (5 to 8) is formed as a cavity inside the translucent body (2).

2. An optical pressure sensor as claimed in Claim 1, <u>characterized in that</u> the body (2) has four pressure measurement chambers (5 to 8) uniformly distributed along its circumference and arranged pairwise opposite each other, each chamber having an inlet opening (9 to 12), different pressures being applied to the two pairs of pressure measurement chambers (5 and 7; 6 and 8).

3. An optical pressure sensor as claimed in Claim 2, <u>characterized in that</u> the four pressure measurement chambers (5 to 8) are constructed as slots which are sealed from the outside and which are arranged pairwise opposite each other by way of their longitudinal walls.

4. An optical pressure sensor as claimed in Claim 3, <u>characterized in that</u> the slot-shaped pressure measurement chambers are constructed so as to be straight.

5. An optical pressure sensor as claimed in Claim 3, <u>characterized in that</u> the pressure measurement chambers (5 to 8) in the form of slots have the shape of a segment of a circle and are located on a common radius.

6, An optical pressure sensor as claimed in Claim 2, <u>characterized in that</u> the four pressure measurement chambers are constructed as circular bores which are located on a common radius and which are sealed from the outside.

7. An optical pressure sensor as claimed in the Claims 1 to 6, <u>characterized in that</u> the pressure measurement chambers (5 to 8) are formed as continuous holes in the body (2) on which sealing plates (3, 4) are arranged on both sides at the area of the pressure measurement chambers (5 to 8).

8. An optical pressure sensor as claimed in Claim 7, <u>characterized in that</u> the sealing plates (19, 20) consist of metal and are joined to each other by means of screws.

9. An optical pressure sensor as claimed in Claim 7 or 8, characterized in that the body (2) consists of a circular disk, the sealing plates (3, 4, 19, 20) having an annular shape.

10. An optical pressure sensor as claimed in the Claims 1 to 9, <u>characterized in that</u> the body (2) comprises additional recesses (13 to 16) between the pressure measurement chambers (5 to 8).

## Revendications

1. Capteur optique de pression constitué, d'une part, par un corps transparent (2) qui communique avec une chambre de mesure de la pression (5 à 8) présentant une ouverture d'entrée pour un milieu liquide ou gazeux sous pression et qui est traversé par de la lumière polarisée (17) et, d'autre part, par un analyseur (18) qui, vu dans le sens d'irradiation, est disposé derrière le corps et qui, de la lumière ayant un état de polarisation dépendant de la pression, extrait par filtrage de la lumière à polarisation linéaire ayant une intensité qui varie avec la pression régnant dans la chambre de mesure de la pression (5 à 8), caractérisé en ce que la chambre de mesure de la pression (5 à 8) est réalisée sous la forme d'une cavité à l'intérieur du corps transparent (2).

2. Capteur optique de pression selon la revendication 1, caractérisé en ce que le corps (2) présente quatre chambres de mesure de la pression (5 à 8) régulièrement réparties sur son pourtour et se regardant deux par deux, chambres qui présentent chacune une ouverture d'entrée (9 à 12) des pressions différentes étant appliquées aux deux paires de chambres de mesure de la pression.

3. Capteur optique de pression selon la revendication 2, caractérisé en ce que les quatre chambres de mesure de la pression (5 à 8) sont réalisées sous la forme de rainures fermées de façon étanche par rapport à l'extérieur et se regardant deux par deux par leurs parois longitudinales.

4. Capteur optique de pression selon la revendication 3, caractérisé en ce que les chambres de, mesure de la pression en forme de rainures sont droites.

5. Capteur optique de pression selon la revendication 3, caractérisé en ce que les chambres de mesure de la pression (5 à 8) réalisées sous la forme de fentes présentent la forme d'un segment de cercle et sont situées sur un rayon commun.

6. Capteur optique de pression selon la revendication 2, caractérisé en ce que les quatre chambres de mesure de la pression sont réalisées sous la forme d'alésages circulaires situés sur un rayon commun et fermés de façon étanche par rapport a l'extérieur.

7. Capteur optique de pression selon la revendication 1 à 6, caractérisé en ce que les chambres de mesure de la pression (5 à 8) sont pratiquées dans le corps (2) sous la forme de trous continus sur lesquels, des deux côtés, sont disposées des plaques d'étanchéité (3, 4) au niveau des chambres de mesure de la pression (5 à 8).

8. Capteur optique de pression selon la revendication 7, caractérisé en ce que les plaques d'étanchéité (19, 20) sont en métal et sùnt réunies par des vis.

9. Capteur optique de pression selon la revendication 7 ou 8, caractérisé en ce que le corps (2) est constitué par un disque circulaire et les plaques d'étanchéité (3, 4, 19, 20) sont annulaires.

10. Capteur optique de pression selon l'une des revendications 2 à 6, caractérisé en ce qu'entre les chambres de mesure de la pression (5 à 8), le corps (2) présente des évidements supplémentaires (13 à 16).

Fig.1

Fig.2

Fig.3